# EUROPEAN PATENT SPECIFICATION

(11) **EP 1 062 110 B1**
(45) Date of publication and mention of the grant of the patent: **04.08.2004**
(21) Application number: 99910544.8
(22) Date of filing: 18.03.1999
(51) Int. Cl.: B60K 5/12

(54) **VEHICLE POWER UNIT MOUNTING ARRANGEMENTS**
BEFESTIGUNGSANORDUNG EINER ANTRIEBSEINHEIT FÜR FAHRZEUGE
SYSTEMES DE MONTAGE DU BLOC MOTEUR DANS UN VEHICULE

(30) Priority: 20.03.1998 FR 9803710
(43) Date of publication of application: 27.12.2000
(73) Proprietor: TRELLEBORG AB, 231 22 Trelleborg (SE)
(72) Inventor: TOURNIER, Pascal, Gerard, F-44330 La Pallet (FR)
(74) Representative: Preissner, Nicolaus
(86) International application number: PCT/GB1999/000853
(87) International publication number: WO 1999/048715

(56) References cited:
- WO-A-93/01064
- DE-A- 2 152 136
- DE-A- 2 615 503
- DE-A- 4 318 254
- DE-C- 19 636 167
- US-A- 3 347 501

## Description

The invention relates to a mounting and guiding arrangement for a power unit in a vehicle, comprising at least one substantially rigid strut extending approximately longitudinally of the vehicle from a first attachment zone where one longitudinal point on the strut is attached to the chassis or body of the vehicle to a second attachment zone where a spaced longitudinal point on the strut is attached to the power unit and which is lower in a vertical plane than the first attachment zone, whereby, in response to a frontal impact on the vehicle, pivotal movement of the strut occurs at at least one attachment zone and about an axis extending transversely of the vehicle and the force of the impact is transmitted along the strut to guide the power unit in a rearwardly and downwardly inclined direction relative to the body or chassis of the vehicle. Embodiments of the invention to be described in more detail below are arranged to reduce or minimise the intrusion of the engine and associated components into the passenger compartment of the vehicle in the event of a frontal impact to the vehicle, and to increase the absorption of energy in the event of such an impact.

A power unit mounting arrangement as first set forth above is shown, for example, in DE-A-4 318 254. In this known arrangement, the engine is supported on conventional vibration-damping mounts or struts which ensure its normal location and provide vibration-damping. In addition, inclined struts, pivotted at both ends, extend from the body or chassis of the vehicle to the engine. In the event of a frontal impact, the connections between the engine and the body or chassis via the vibration-damping mounts break, and the pivotted inclined struts are intended to guide the engine in a downwardly inclined direction as it moves in the direction towards the passenger compartment. In such an arrangement, the inclined struts, which must be provided in addition to the normal vibration-damping mounts, can only guide the engine after rupture of the vibration-damping mounts.

Another known arrangement is shown in DE-A-615 503. Again, inclined struts, pivotted at each end, extend between the engine and the body or chassis of the vehicle in several directions for guiding the engine in the event of a crash. These struts are not able to support the engine during normal operation, and it is therefore necessary to provide additional further struts or vibration-damping mounts for normally locating the engine.

A further known arrangement is shown in US-A-3 347 501. In this arrangement, the engine is mounted at its forward end or face on a conventional vibration-damping mount and on struts, pivotted at each end, at its rearward end or face. Such an arrangement can only guide the engine in the desired direction when the forwardly positioned vibration-damping engine mount has ruptured, but the forward end of the engine is then disconnected from the body or chassis. A generally similar arrangement is shown in DE-A-2 152 136.

According to the invention, therefore, the known power unit mounting arrangement, as first set forth above, is characterised in that one attachment zone of the strut is non-pivotal prior to the said impact and the other attachment zone comprises vibration-damping means which permits the said pivotal movement in the event of the impact.

Power unit mounting arrangements for mounting the engine and its associated components in a motor vehicle and embodying the invention will now be described, by way of example only, with reference to the accompanying diagrammatic drawings in which:-
Figure 1 is a side view of part of a motor vehicle showing the type of deformation occurring in the general case in response to a frontal impact;
Figure 2 corresponds to Figure 1 but assumes that the engine is mounted with one of the mounting arrangements embodying the invention, and shows how the engine moves incliningly downwards and rearwards in the event of a frontal impact;
Figure 3 shows a side view of an engine mounted by means of one of the mounting arrangements embodying the invention;
Figure 4 shows another of the engine mounting and guiding arrangement embodying the invention;
Figure 5 is a cross-section through an engine fixing arm which may be used in embodiments of the invention;
Figure 6 is a side view of a link which may be used in embodiments of the invention and for situation at the front of the engine;
Figure 7 is a side view of a vehicle showing another mounting arrangement embodying the invention, with a longitudinal cross bar;
Figure 8 is a side view of a further mounting arrangement embodying the invention, incorporating a link attached by two connections to the engine;
Figure 9 is a side view of a vehicle, showing another mounting arrangement embodying the invention;
Figure 10 shows a further engine mounting and guiding arrangement embodying the invention, for mounting at the front of an engine; and
Figure 11 shows yet another engine mounting and guiding arrangement embodying the invention.

Embodiments of the invention may be applied to vehicles with any type of engine, particularly internal combustion engines mounted at the front of the vehicle and directed transversely or longitudinally of the vehicle and with any arrangement of cylinders. In this specification and its claims, the term "power unit" of a vehicle includes the engine and parts which are rigid with the engine such as, in particular, transmission components (clutch, gearbox) and the differential gear housing in the case of front wheel drive vehicles.

In accordance with the embodiments of the invention to be described, the power unit is mounted on the body or chassis of the vehicle by means of substantially rigid struts. One end of each strut is attached to the power unit (or alternatively to the chassis) by means of a conventional vibration-damping mount. The other end of at least one strut is attached directly or indirectly to the body of the vehicle (or alternatively to the power unit), and there is normally no pivotal movement between this end of the strut and its point of attachment to the body or chassis of the vehicle (or to the power unit). The end of each strut fixed on the chassis is situated higher than the end on the power unit.

Because at least one strut normally extends rigidly and non-pivotally from its attachment to the chassis or the power unit to its attachment to the vibration-damping mount, the power unit is properly located within the engine compartment of the vehicle during normal operation. The conventional vibration-damping mounts act in their normal way between the power unit and the chassis to dampen vibrations and to isolate the passenger compartment from the effects of such vibrations.

In the event of a frontal impact to the vehicle (exceeding a predetermined force), the inclined struts cause the power unit to be forced rearwardly and incliningly downwardly of the vehicle. During this forced movement, angular movement will now take place between at least one end of each strut and its attachment point. Thus, at the end of the strut attached to the vibration-damping mount, angular movement will be permitted by the normal elastomeric material in such a mount. At the other attachment point (for the or each strut where there is normally a rigid attachment), angular movement takes place provided that a certain stress threshold is exceeded; a suitable form of connection is therefore necessary, such as a connection which is designed to deform plastically by folding or bending.

At least two struts are required. Each strut must be sufficiently robust that it does not itself fold, bend or break in response to the frontal impact.

It is preferable that downwardly inclined movement of the power unit begins as soon as possible after the frontal impact and before the front part of the vehicle bodywork and various accessories such as the radiator and associated structural elements come into engagement with the engine and perhaps counter its downward movement. By starting the downward movement of the power unit earlier, the movement is extended over a longer period of time and the necessary vertical acceleration of the power unit and consequent forces are thus reduced. It is therefore necessary to have at least one strut mounted forwardly of the power unit and preferably extending forwardly as far as possible of the vehicle body. At least one further strut is provided at the rear end of the power unit, or at its sides, so that, in response to the frontal impact, the power unit does not merely pivot but performs a downwardly inclined translational movement. A strut at a higher level may be provided at the front of the power unit to initiate downward movement thereof for those cases where the impact on the vehicle is exerted at a higher level (e.g. in the case of impact by or with a truck).

The mounting arrangements embodying the invention, and to be described in more detail below, increase the number of mechanical elements which operate at the beginning of the impact and thus increase the absorption of energy. Indeed, the force required to cause the power unit to move backwardly and downwardly itself increases the resistant forces of the side members of the chassis of the vehicle at its frontal end. This makes it possible to reduce the crash path by better absorption within the structure.

In response to a frontal impact, the vehicle normally rises at its rear end. The lowering of the power unit which, as described above, is caused by the embodiments of the invention, contributes to an increase of this upward movement of the rear end of the vehicle. Consequently, for the same relative travel distance of the power unit with respect to the chassis of the vehicle, the absolute vertical acceleration of the power unit is reduced.

An advantage of the embodiments to be described is that the normal vibration-damping mounts are used and adapted, minimising the introduction of additional components.

It is preferable to ensure that all the struts operate to move the power unit downward in the event of an impact, so as to provide a better distribution of the consequent forces. If only some of the engine mounting and location means for the power unit are used for this purpose, then the others must not impede the operation of the embodiments of the invention. Thus, the other point should include rupturable zones which cause breakage in the event of an impact.

The attachment zones, where each end of each strut is attached to the chassis and to the power unit respectively (via a conventional vibration-damping mount in one case), must be sufficiently strong to continue to carry out their attachment function in the event of a frontal impact, because the forces imposed on the struts in the event of an impact, and which are necessary to cause the power unit to move in a downwardly inclined rearward direction, are very substantial.

In the case where transversely mounted power units slope forward, the overall length of the power unit, relative to the longitudinal direction of the vehicle, is increased. Thus, in a crash, it is desirable that it should swivel to reduce this spatial requirement as it moves downwardly. Therefore, it is necessary to bias the upper part of the power unit (above its centre of gravity) with at least one strut mounted forwardly at a higher level. With a swivelling engine, the differential gear housing has a natural tendency to travel downwardly. If a strut is mounted at the rear, it must allow this rotational movement. For this purpose, it may be provided with a deformable zone at one of its ends which unlocks to allow displacement when the lower part of a power unit swivels forward, but closes again and locks when the power unit moves back towards the passenger compartment. Instead, it can be mounted at one of its ends by means of a link which is able to pivot around an axis transverse to the vehicle in the event of a crash. This pivotting movement is normally prevented by means of a locking device which breaks in the event of a crash to permit such movement. The link then pivots so as to increase the effective length of the strut. When the power unit is in a vertical position, the strut and the line are in alignment. When the rear of the power unit moves backwards, the link continues to rotate in the same direction, but such movement is then prevented by means of an abutment, consequently blocking movement of the strut. The strut thus compels the power unit to move downwards.

When the power unit comes in contact with an obstacle, it tends to position itself parallel to such obstacle. The struts must continue to act in such an event and force the power unit to continue its downwardly inclined movement. The stress increases must be borne by means of plastic deformations of the fixing or of the struts themselves.

Because embodiments of the invention cause the power unit to move backwardly and downwardly, it is advantageous to arrange for rigid structural elements to be mounted at the lower part of the power unit so that they are also similarly moved in the event of a crash.

Members, such as transmission shafts for example, which extend from the power unit to other parts of the vehicle, must be arranged so that they do not impede the downwardly inclined movement of the power unit in the event of a frontal impact.

Advantageously, the bulkhead between the engine and passenger compartment of the vehicle is reinforced at the appropriate level to assist in forcing the downwardly inclined movement of the power unit in the event of a crash.

Suitably strong and rigid structures on the vehicle on which the distal ends of the struts may be fixed include, for example, the structural elements bearing the shock absorber and/or suspension units, the side members, and the cross bar at the front of the vehicle between the two side members of the chassis. It should be noted that the fixing of a non-vibrating component on a very rigid structure promotes vibration insulation.

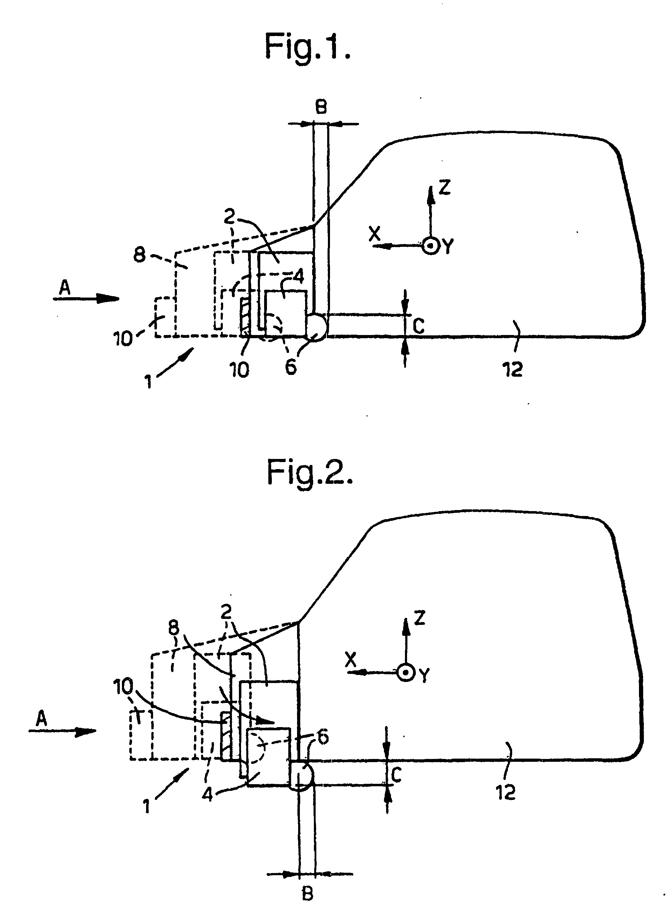

Figure 1 shows in dotted lines the initial -geometry of the front of the vehicle in the general case. The power unit 1 comprises the engine 2 with its gearbox 4 and the differential gear housing 6 mounted in the engine compartment 8. In the event of a frontal impact against the front end or bumper 10 of the vehicle, the engine compartment 2 is progressively compressed. However, the power unit 1, being substantially massive and rigid, does not lose its shape and is pushed backwards, relative to the remainder of the vehicle, and intrudes into the passenger compartment 12 by a horizontal distance B and a vertical distance C.

Figure 2 corresponds to Figure 1 but shows the movement of the power unit 1, in the event of a frontal impact A, when the power unit is mounted in accordance with embodiments of the invention. The Figure shows how the power unit 1 no longer intrudes into the passenger compartment.

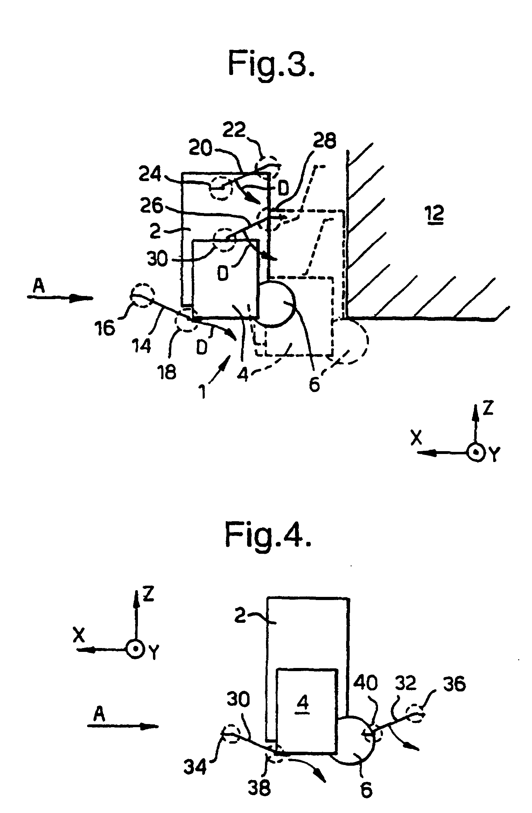

Figure 3 illustrates the struts provided in accordance with the invention in more detail. One such strut 14 is positioned at the forward end of the power unit 1. In the manner already described, it is attached to the chassis by an attachment zone 16 and attached to the power unit (such as to the gearbox 4), by an attachment zone 18. Other links 20 attach the upper end of the engine 2 to the chassis by means of attachment zones 22 and 24. One or more further attachment links 26 may be used to attach the upper part of the gearbox 4 to the chassis by means of attachment zones 28 and 30. As already explained, the attachment zone at one end of at least one strut normally does not permit pivotal movement and the attachment zone at the other end of the strut incorporates a conventional vibration-damping arrangement. The configuration shown in Figure 3 corresponds to a pendulous engine suspension system.

The dotted positions of the struts 14,20,26 show how, in the event of a frontal impact, they cause the power unit 1 to move in a rearwardly and downwardly inclined direction so as to be clear of the passenger compartment 12. The struts move in the directions of the arrows D.

Figure 4 shows another possible configuration of the struts. As shown, struts 30 and 32 are fixed at the bottom of the power unit 1. Several similar struts may be provided on each side. A total of at least three are required. The attachment zones 34,36 are higher than the attachment zones 38,40 on the power unit.

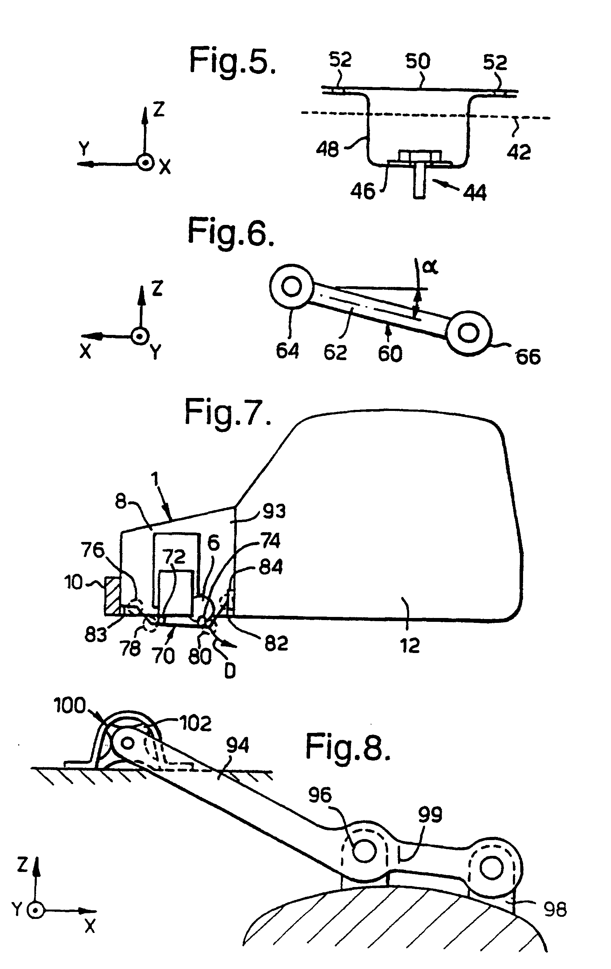

Figure 5 shows one example of the attachment zone for attaching one of the struts to the chassis. The zone is situated below the bending axis of inertia 42 of the straight section of the strut along the horizontal transverse axis of the vehicle. The end of the strut is attached by bolts 44. Thus, the compression force imposed on the area 46 by the bolts 44 in a collision exert a bending moment on the straight section and tend to cause a bending of the strut downwardly, thus forcing downward movement of the power unit. The structure shown is a mechanically welded unit consisting of a metal sheet stamped in U-shape 48 and a flat portion 50 welded on the top at the spots 52. Conversely, the attachment zone for a strut on the power unit itself is situated above the bending axis of inertia of this part of the strut. This arrangement allows a reduction in the initial inclination of the struts, and consequently the length of the strut required to cause the power unit to move downwardly to a sufficient extent. This provides gains in overall size, weight and cost.

Further details of alternative configurations will now be provided.

In one configuration, the conventional vibration-damping mounts are mounted on the chassis and connected to the power unit through the inclined struts. One end of at least one strut is non-pivotally attached. Thus, at one end, the strut is connected to the respective vibration-damping mount, and at the other end, the strut is connected to the engine. The vibration-damping mount will normally incorporate elastomeric material (and, advantageously, hydraulic vibration-damping arrangements). In the event of a crash, the elastomeric material provides the necessary angular movement at this end of the strut. At the opposite end, bending takes place. The struts are preferably made of metal and thus undergo plastic deformation. Suitable alloys such as magnesium alloys may be used. Their geometry is such that a compression along the longitudinal axis of the vehicle would tend to cause the strut to flex, drawing the power unit downwards.

It is necessary that the central part of the struts, between the ends, should undergo little deformation. That is to say, it must ensure that the power unit is properly located so as to force it to descend in a downwardly and inclined direction and to a sufficient extent, otherwise the strut would only move backwards, bending completely, without any or without sufficient downward movement. The ends, alone, of the struts are required to be deformed and to act as pivots.

Figure 6 shows a strut 60 having a rigid body 62 and pivotal connections 64 and 66 at its opposite ends which can be used to supplement the operation of mounting arrangements embodying the invention. The axes of rotation of the pivotal ends extend in the transverse direction across the vehicle. If several similar struts are used and attached to the same face of the power unit, they must have the same axis of rotation. Conventional torque-recovery links and clearance-limitation links may be used as struts 60. Such links reduce the transmission of vibration, particularly under driving torque and help to force the power unit to move downwardly in a crash.

Figure 7 shows a third solution. Here, a longitudinal rigid strut or bar 70 extends under the power unit 1 and supports vibration-damping mounts 72,74 which support the power unit 1 in a vibration-damping manner. In the event of a frontal impact, deformation of the longitudinal member 70 takes place, causing the power unit to move in a downwardly inclined direction. In response to such an impact, "folding" or hinging takes place at positions indicated at 76,78,80 and 82 so that the central part between the two hinged zones 78 and 80 moves downwardly. Normally, when a longitudinal member is used to support a power unit, it is suspended by rubber blocks at its ends 83 and 84. However, when used in embodiments of the invention, it is preferably rigidly secured to the chassis, so that the desired deformation is more easily obtained.

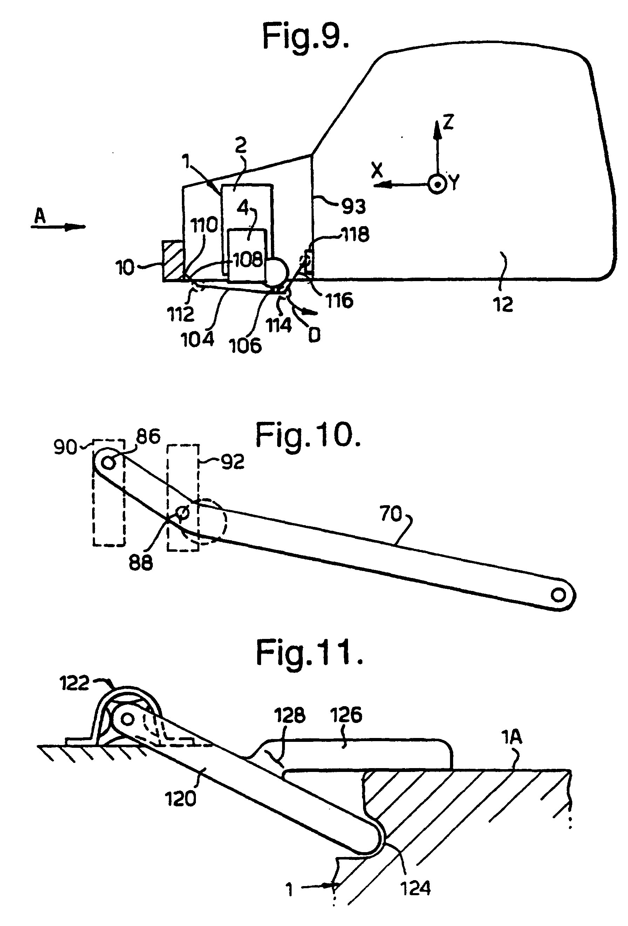

Figure 10 shows an alternative arrangement in which the longitudinal member 70 is mounted at its front end on two blocks 86 and 88 which may incorporate rubber to provide vibration insulation but at the same time securely holding the end of the strut. The use of the two blocks ensures that a bending moment is exerted on the strut in the event of a frontal impact. The frontmost block 86 is higher than the block 88. In addition, the blocks 86,88 are mounted on zones 90,92 which become deformed sequentially in the event of a crash to apply the bending moment, or the structure upon which they are fixed twists to exert it.

The rearmost end 84 (see Figure 7) of the strut is mounted on a rigid part of the vehicle, such as on the bulkhead 93 between the engine and passenger compartments.

Figure 8 shows a fourth possible solution in which a strut 94 is mounted at one end on two elastomer blocks 96,98 so as to ensure that it is fixed in relation to the six degrees of freedom. One of these blocks has a rupturable axis which permits rotational freedom of the arm in response to a severe impact. Rupture at one of the blocks is necessary in order to allow the power unit to move incliningly downwardly. The strut may also be provided with a rupturable area 99 which breaks there in the event of the connection at the block 96 failing to break. At its opposite end, the strut is connected to the chassis by means of a vibration-damping support 100. This incorporates elastomeric material (e.g. 102) which permits the necessary pivotal movement of the strut in the event of an impact.

In a fifth solution shown in Figure 9, a rigid strut or bar 104 extends under the power unit, and mounts the power unit 1 by means of a conventional vibration-damping mount 106. The forward end of the bar 104 comprises a part 108 which is fixed behind the bumper 10 at 110 and has a hinge point 112 which is normally rigid but which bends in the event of an impact. A similar normally rigid hinge point 114 (which may be integrated with the vibration-damping mount 106) connects to a part 116 of the rigid bar 104, which is fixed to the bulkhead at 118.

A sixth solution is shown in Figure 11. The strut comprises a rigid bar 120 extending from a conventional vibration-damping mount 122 and being inclined downwardly towards the power unit 1 where its end is located in a socket 124. An arm 126, rigid with the main part of the bar 120, extends from the bar to lie in contact with a surface 1A of the power unit 1. The arm 126 thus ensures that the bar 120 is normally held rigidly at its end near the power unit 1. In the event of an impact, the arm 126 ruptures at a rupture zone 128 and the end of the bar 120 can then pivot in the socket 124.

## Claims

1. A mounting and guiding arrangement for a power unit (1) in a vehicle, comprising at least one substantially rigid strut (14,20,26;30,32;70;94;104) extending approximately longitudinally of the vehicle from a first attachment zone where one longitudinal point on the strut (14,20,26;30,32;70;94;104) is attached to the chassis or body of the vehicle to a second attachment zone where a spaced longitudinal point on the strut (14,20,26;30,32;70;94;104) is attached to the power unit and which is lower in a vertical plane than the first attachment zone, whereby, in response to a frontal impact on the vehicle, pivotal movement of the strut (14,20,26;30,32;70;94;104) occurs at at least one attachment zone and about an axis extending transversely of the vehicle and the force of the impact is transmitted along the strut (14,20,26;30,32;70;94;104) to guide the power unit (1) in a rearwardly and downwardly inclined direction relative to the body or chassis of the vehicle, **characterised in that** one attachment zone of the strut (14,20,26;30,32;70;94;104) is non-pivotal prior to the said impact and the other attachment zone comprises vibration-damping means which permits the said pivotal movement in the event of the impact.

2. An arrangement according to claim 1, **characterised in that** the strut (14;30) is disposed in front of the power unit (1).

3. An arrangement according to claim 1 or 2, charactensed in that pivotal movement in the said one attachment zone takes place in the event of the impact by deformation at that attachment zone.

4. An arrangement according to any preceding claim, **characterised in that** the strut (70; 104) extends under the power unit (1), the said one attachment zone (76) connecting one end of the strut (70) to the chassis or body of the vehicle in front of the power unit (1), the said other attachment zone comprising the vibration-damping means and attaching an intermediate point of the strut (70) to the power unit (1), the strut (70) extending to a third attachment zone (84) which attaches the opposite end of the strut (70) to the chassis or body of the vehicle rearwardly of the power unit (1).

5. An arrangement according to claim 4, **characterised by** a further attachment zone (74) between the said other and the third attachment zones (80,84) which comprises further vibration-damping means connecting the strut (70) to the power unit (1).

6. An arrangement according to claim 4 or 5, in which the strut (70) is inclined downwardly from the said one to the said other attachment zones (78,80) and is inclined upwardly from the said further attachment zone to the third attachment zone (74,84).

7. An arrangement according to any one of claims 4 to 6, in which the strut (70) incorporates points along its length at which bending takes place in the event of a said impact.

8. An arrangement according to any one of claims 1 to 3, **characterised in that** the said attachment zone comprises at least two resilient supports (96,98) for respectively and resiliently attaching closely spaced longitudinal points on the strut (94) to the chassis or the power units (1), rupturing taking place at the said one attachment zone in response to a said impact to enable the strut (94) to pivot there at one of the supports (96,98).

9. An arrangement according to claim 8, **characterised in that** the said rupturing takes place at one of the supports (96,98).

10. An arrangement according to claim 8, **characterised in that** the rupturing comprises rupturing of the strut (94) between the two supports (96,98).

11. An arrangement according to any preceding claim, **characterised in that** the strut comprises a bending location (e.g. 78) which is positioned adjacent the said one attachment zone and which allows bending of the strut by deformation in response to the said impact.

## Patentansprüche

1. Befestigungs- und Führungsanordnung für eine Antriebseinheit (1) in einem Fahrzeug, aufweisend mindestens eine im Wesentlichen starre Strebe (14,20,26;30,32;70;94;104), die sich annähernd in Längsrichtung des Fahrzeuges erstreckt von einer ersten Befestigungszone, in der ein Punkt längs der Strebe (14,20,26;30,32;70;94;104) am Fahrgestell oder an der Karosserie des Fahrzeuges befestigt ist, zu einer zweiten Befestigungszone, in der ein beabstandeter Punkt längs der Strebe (14,20,26;30,32;70;94;104) an der Antriebseinheit befestigt ist und die in einer vertikalen Ebene niedriger als die erste Befestigungszone gelegen ist, wobei als Reaktion auf einen Frontalaufprall am Fahrzeug eine Drehbewegung der Strebe (14,20,26;30,32;70;94;104) in mindestens einer Befestigungszone und um eine quer zum Fahrzeug verlaufende Achse herum, auftritt und die Kraft des Aufpralls längs der Strebe (14,20,26;30,32;70;94;104) übertragen wird, um die Antriebseinheit (1) in einer nach hinten und nach unten bezogen auf die Karosserie oder das Fahrgestell des Fahrzeuges geneigten Richtung zu leiten, **dadurch gekennzeichnet, dass** eine Befestigungszone der Strebe (14,20,26;30,32;70;94;104) vor dem Aufprall nicht drehbar ist und die andere Befestigungszone schwingungsdämpfende Mittel enthält, die eine Drehbewegung beim Aufprall zulässt.

2. Anordnung nach Anspruch 1, **dadurch gekennzeichnet, dass** die Strebe (14;30) an der Vorderseite der Antriebseinheit (1) angeordnet ist.

3. Anordnung nach Anspruch 1 oder 2, **dadurch gekennzeichnet, dass** die beim Aufprall in einer Befestigungszone erfolgende Drehbewegung durch Verformung in dieser Befestigungszone erfolgt.

4. Anordnung nach einem der vorstehenden Ansprüche, **dadurch gekennzeichnet, dass** sich die Strebe (70;104) unterhalb der Antriebseinheit (1) erstreckt, wobei in der einen Befestigungszone (76) ein Ende der Strebe (70) vor der Antriebseinheit (1) mit dem Fahrgestell oder der Karosserie des Fahrzeuges verbunden ist und in der anderen Befestigungszone die schwingungsdämpfenden Mittel enthalten sind und ein Zwischenpunkt der Strebe (70) an der Antriebseinheit (1) befestigt ist, wobei sich die Strebe (70) zu einer dritten Befestigungszone (84) erstreckt, in der das gegenüber liegende Ende der Strebe (70) hinter der Antriebseinheit (1) am Fahrgestell oder an der Karosserie des Fahrzeuges befestigt ist.

5. Anordnung nach Anspruch 4, **dadurch gekennzeichnet, dass** sich zwischen der erwähnten anderen Befestigungszone und der dritten Befestigungszone (80,84) eine weitere Befestigungszone (74) befindet, die weitere schwingungsdämpfende Mittel enthält, und die Strebe (70) mit der Antriebseinheit (1) verbindet.

6. Anordnung nach Anspruch 4 oder 5, wobei die Strebe (70) von der einen zur anderen Befestigungszone (78,80) nach unten geneigt ist und von der weiteren Befestigungszone zur dritten Befestigungszone (74,84) nach oben geneigt ist.

7. Anordnung nach einem der Ansprüche 4 bis 6, wobei die Strebe (70) auf ihrer Länge Punkte aufweist, an denen bei einem Aufprall eine Verbiegung erfolgt.

8. Anordnung nach einem der Ansprüche 1 bis 3, **dadurch gekennzeichnet, dass** die Befestigungszone mindestens zwei rückprallelastische Lager (96,98) aufweist, um in engem Abstand von einander gelegene Punkte längs der Strebe (94) jeweils rückprallelastisch am Fahrgestell oder an der Antriebseinheit (1) zu befestigen, wobei als Reaktion auf einen Aufprall in der einen Befestigungszone ein Bruch auftritt, damit sich die Strebe (94) an einem der Lager (96,98) drehen kann.

9. Anordnung nach Anspruch 8, **dadurch gekennzeichnet, dass** ein Bruch an einem der Lager (96,98) auftritt.

10. Anordnung nach Anspruch 8, **dadurch gekennzeichnet, dass** an der Strebe (94) ein Bruch zwischen den beiden Lagern (96,98) auftritt.

11. Anordnung nach einem der vorstehenden Ansprüche, **dadurch gekennzeichnet, dass** die Strebe eine Biegestelle (zum Beispiel 78) aufweist, die angrenzend an die eine Befestigungszone gelegen ist und gestattet, dass sich die Strebe als Reaktion auf einen Aufprall durch Verformung verbiegt.

## Revendications

1. Dispositif de montage et de guidage d'un moteur (1) dans un véhicule, comprenant au moins une entretoise essentiellement rigide (14,20,26;30,32;70;94;104) s'étendant approximativement dans la direction longitudinale du véhicule depuis une première zone de fixation où un point longitudinal sur l'entretoise (14,20,26;30,32;70;94;104) est relié au châssis ou au corps du véhicule vers une deuxième zone de fixation où un point longitudinal espacé sur l'entretoise (14,20,26;30,32;70;94;104) est relié au moteur, et qui est situé plus bas dans un plan vertical que la première zone de fixation, de telle manière qu'en réponse à un choc frontal du véhicule , un pivotement de l'entretoise (14,20,26;30,32;70;94;104) se produit dans au moins une zone de fixation et autour d'un axe sensiblement transversal au véhicule et la force du choc est transmise le long de l'entretoise (14,20,26;30,32;70;94;104) pour guider le moteur (1) dans une direction inclinée vers l'arrière et vers le bas par rapport au châssis ou au corps du véhicule, **caractérisé en ce que** une zone de fixation de l'entretoise (14,20,26;30,32;70;94;104) est montée non pivotante avant ledit choc et l'autre zone de fixation comprend des moyens anti-vibratoire permettant ledit pivotement lors du choc.

2. Dispositif selon la revendication 1, **caractérisé en ce que** l'entretoise (14;30) est disposée devant le moteur (1).

3. Dispositif selon l'une ou l'autre des revendications 1 et 2, **caractérisé en ce qu**'un pivotement dans ladite zone de fixation se produit, lors du choc, par déformation de cette zone de fixation.

4. Dispositif selon l'une quelconque des revendications précédentes, **caractérisé en ce que** l'entretoise (70;104) s'étend sous le moteur (1), ladite zone de fixation (76) rattachant une extrémité de l'entretoise (70) au châssis ou au corps du véhicule devant le moteur (1), l'autre zone de fixation comprenant les moyens anti-vibratoire et reliant un point intermédiaire de l'entretoise (70) au moteur (1) et **en ce que** l'entretoise (70) s'étend vers une troisième zone de fixation (84) qui relie l'extrémité opposée de l'entretoise (70) au châssis ou au corps du véhicule vers l'arrière du moteur (1).

5. Dispositif selon la revendication 4, **caractérisé en ce qu'**il comprend une zone de fixation supplémentaire (74) entre ladite autre zone de fixation et la troisième zone de fixation (80,84), qui comporte des moyens anti-vibratoire supplémentaires rattachant l'entretoise (70) au moteur (1).

6. Dispositif selon l'une ou l'autre des revendications 4 et 5, **caractérisé en ce que** l'entretoise (70) est inclinée vers le bas depuis ladite zone de fixation vers ladite autre zone de fixation (78,80) et est inclinée vers le haut en direction de la troisième zone de fixation (74,84).

7. Dispositif selon l'une quelconque des revendications 4 à 6, **caractérisé en ce que** l'entretoise (70) comporte des points le long de sa longueur, au niveau desquels un pliage se produit lors dudit choc.

8. Dispositif selon l'une quelconque des revendications 1 à 3, **caractérisé en ce que** ladite zone de fixation comprend au moins deux plots en élastomère (96,98) pour relier élastiquement et respectivement des points longitudinaux proches sur l'entretoise (94) au châssis ou au moteur (1), et **en ce qu'**une rupture se produit au niveau de ladite zone de fixation en réponse audit choc pour permettre à l'entretoise (94) de pivoter autour de l'un des plots (96,98).

9. Dispositif selon la revendication 8, **caractérisé en ce qu'**un des plots (96,98) est conformé pour céder en réponse audit choc.

10. Dispositif selon la revendication 8, **caractérisé en ce que** la portion de l'entretoise (94) située entre les deux plots (96,98) est conformée pour céder en réponse audit choc.

11. Dispositif selon l'une quelconque des revendications précédentes, **caractérisé en ce que** l'entretoise comprend une amorce de pliage (par exemple 78) disposée de manière adjacente à ladite une zone de fixation et qui permet un pliage de l'entretoise par déformation en réponse audit choc.
